# EUROPÄISCHE PATENTSCHRIFT

(11) **EP 3 895 954 B1**
(45) Veröffentlichungstag und Bekanntmachung des Hinweises auf die Patenterteilung: **17.07.2024**
(21) Anmeldenummer: 21167128.4
(22) Anmeldetag: 07.04.2021
(51) Int. Cl.: B61G 5/06, B61G 7/00, B61G 7/14, B61L 15/00

(54) **KUPPLUNG, INSBESONDERE AUTOMATISCHE KUPPLUNG, SPURGEBUNDENES FAHRZEUG MIT EINER DERARTIGEN KUPPLUNG SOWIE EINEN FAHRZEUGVERBAND UND EIN FAHRZEUGVERBAND-KOMMUNIKATIONSSYSTEM**
COUPLING, IN PARTICULAR AUTOMATIC COUPLING, TRACK-BOUND VEHICLE WITH SUCH A COUPLING AND A VEHICLE TRAIN AND A VEHICLE TRAIN COMMUNICATION SYSTEM
ATTELAGE, EN PARTICULIER ATTELAGE AUTOMATIQUE, VÉHICULE GUIDÉ SUR RAIL DOTÉ D'UN TEL ATTELAGE, AINSI QUE CONVOI DE VÉHICULES ET SYSTÈME DE COMMUNICATION DE CONVOI DE VÉHICULES

(30) Priorität: 09.04.2020 DE 102020204638
(43) Veröffentlichungstag der Anmeldung: 20.10.2021
(73) Patentinhaber: Voith Patent GmbH, 89522 Heidenheim (DE); PJ Monitoring GmbH, 8020 Graz (AT)
(72) Erfinder: Radewagen, Christian, 38228 Salzgitter (DE); Tengler, Heinz, 89558 Böhmenkirch (DE); Habets, Matheus, 73450 Neresheim (DE); Assmann, Gert, 81241 München (DE); Petschnig, Günter, Graz (AT); Lorenzutti, Christoph, Graz (AT)
(74) Vertreter: Voith Patent GmbH - Patentabteilung

(56) Entgegenhaltungen:
- EP-A2- 2 792 571
- WO-A1-2017/077474
- CN-U- 207 078 153
- DE-A1- 102012 009 114
- DE-C1- 4 441 396
- FR-A1- 3 036 676
- GB-A- 2 462 511
- US-A1- 2014 353 434

## Beschreibung

Die Erfindung betrifft Kupplung, insbesondere automatische Kupplung, ein spurgebundenes Fahrzeug, insbesondere Schienenfahrzeug mit einer derartigen Kupplung sowie einen Fahrzeugverband und ein Fahrzeugverband-Kommunikationssystem.

Automatische Kupplungen an Schienenfahrzeugen dienen der Verbindung zweier benachbart angeordneter Fahrzeuge, insbesondere Wagen. Die Wagen werden dabei entkuppelt, indem üblicherweise der Fahrzeugführer im Führerstand des mit automatischen Kupplungen ausgerüsteten Fahrzeugverbandes den Entkuppelvorgang auslöst. In der Regel wird nach einer Sicherheitsabfrage in der zentralen Fahrzeugsteuerung dieser Auslösebefehl zur Umsetzung an die Entkuppeleinrichtung weitergeleitet. Dabei wird das angesteuerte Kupplungspaar gelöst. Sensoren melden dem Führerstand den aktuellen Status der automatischen Kupplung (gekuppelt, entkuppelt) am Fahrzeug oder Fahrzeugverband.

Im Schienengüterverkehr, insbesondere zur gezielten Anordnung und Reihung der Fahrzeuge, müssen bestehende Fahrzeugverbände aufgelöst und einzelne Fahrzeuge oder Fahrzeuggruppen neu arrangiert werden. Dies erfolgt bisher durch manuelle Entkuppelung und Neusortierung der Fahrzeuge beispielsweise über einen Ablaufberg. Eine gezielte automatisierte und ferngesteuerte Trennung zweier Fahrzeuge oder einzelner Fahrzeuggruppen an beliebiger Position ist mit dieser Lösung jedoch nicht möglich.

Des Weiteren können an den einzelnen Kupplungen Einrichtungen zur Erfassung von Zustands- und Prozessgrößen angeordnet sein, welche insbesondere zu Diagnosezwecken oder im Fahrzeugverbund zum frühzeitigen Erkennen von Störungen abfragbar sind. Diese sind jedoch im Fahrzeugverband hinsichtlich der Position ihres Auftretens innerhalb dessen nur schwer zuordenbar abfragbar. Ferner sind diese in der Fahrzeugsteuerung des jeweiligen Zugverbandes fest hinterlegt. Eine Kommunikation erfolgt immer über die Fahrzeugsteuerung.

DE 10 2012 009 114 A1 offenbart die Anordnung einer Einrichtung zur Datenübertragung, an einer Kupplung zum Übertragen von Daten sowohl im gekuppelten Zustand und auch davor, welche den Einsatz einer elektromechanischen Steckkupplung vermeidet. Bei einem Kupplungsvorgang wird dabei mithilfe dieser ohnehin vorhandenen Datenübertragungsvorrichtung und einer wagenbezogenen Auswerteinrichtung die Kennung der am Kupplungsvorgang beteiligten Funkstützpunkte geprüft, wobei die Kennung die Zug- bzw. Wagenart und den Softwarestand des Zuges enthält. Für einen Kuppelvorgang sind daher immer die Zug- oder Wageninformationen sowie der Softwarestand maßgeblich.

GB 2462511 A1 offenbart die Möglichkeit der drahtlosen Datenübertragung zwischen zwei Komponenten eines Zuges, insbesondere um den die Kupplungszustand zu prüfen.

Der Erfindung lag die Aufgabe zugrunde, die Voraussetzungen zu schaffen, um zum

Einen einen Entkuppelprozess ferngesteuert und bei Bedarf an beliebiger Stelle eines Fahrzeugverbandes auslösen zu können. Zum anderen ist es erwünscht, Störungen in der Funktionsweise der Kupplungen oder einzelner Komponenten gezielt und frühzeitig in einem Fahrzeugverbund zu erkennen.

Die Aufgabe wird erfindungsgemäß durch eine Ausführung entsprechend der Ansprüche 1, 10, 12 und 13 gelöst. Weitere vorteilhafte Merkmale der erfindungsgemäßen Ausführung finden sich in den Unteransprüchen.

Eine Kupplung, insbesondere automatische Kupplung zum Verbinden eines spurgebundenen Fahrzeuges mit einer Gegenkupplung eines weiteren spurgebundenen Fahrzeuges, mit einem, einen Kupplungsverschluss zum Kuppeln mit der Gegenkupplung aufweisenden Kupplungskopf ist erfindungsgemäß dadurch gekennzeichnet, dass an der Kupplung eine Identifikationseinrichtung zum Identifizieren der Kupplung angeordnet ist, umfassend einen Identifikationsträger und eine Kommunikationseinrichtung zum Kommunizieren mit einer Identifikationseinrichtung der Gegenkupplung und zum Kommunizieren mit einer der Kupplung zugeordneten Einrichtung zum Erfassen und Verarbeiten von Daten und Informationen und/oder kupplungsfremden Einrichtung zum Erfassen und Verarbeiten von Daten und Informationen.

Unter Identifikation ist insbesondere die eindeutige und damit unverwechselbare Kennung und Erkennung eines einzelnen Objektes, insbesondere einer einzelnen Kupplung durch zumindest eine einzelne Information gemeint.

Unter Kommunikation wird insbesondere die Übertragung von Daten und Informationen verstanden, welche unidirektional oder bidirektional als Austausch zwischen zwei Komponenten oder Einrichtungen erfolgen kann.

Bei einem spurgebundenen Fahrzeug handelt es sich insbesondere um ein Schienenfahrzeug, welches als einzelner Wagen oder Triebfahrzeug vorliegen kann.

Unter einer Einrichtung zum Erfassen und Verarbeiten von Daten oder Informationen wird insbesondere eine Einrichtung verstanden, welche geeignet ist, Daten und Informationen zu erfassen, zu übertragen, auszuwerten, zu speichern und zu verändern. Derartige Einrichtungen weisen dazu Kommunikationsschnittstellen zur Kopplung mit Erfassungseinrichtungen für Daten, insbesondere Sensoren, Kommunikationsschnittstellen zur Kopplung mit Stelleinrichtungen und/oder anderen Einrichtungen zur Erfassung und Verarbeitung von Daten und Informationen auf. Bei diesen kann es sich um entsprechende Steuereinrichtungen handeln.

Die erfindungsgemäße Anordnung einer Identifikationseinrichtung an einer einzelnen Kupplung und Ausbildung der Identifikationseinrichtung mit Identifikationsträger und Kommunikationseinrichtung bietet zum einen den Vorteil der Zuweisung einer eindeutigen Kennung zu dieser Kupplung, kurz ID genannt und damit eine eindeutige Erkennung der an einem Fahrzeug angeordneten Kupplungen. Ferner ist über die Kommunikationseinrichtung auch eine eindeutige Identifikation der mit der Kupplung verbundenen Gegenkupplung möglich. Dies bietet die Voraussetzung zur gezielten Ansteuerung einer einzelnen Kupplung in einem Fahrzeugverband für unterschiedliche Zwecke, beispielsweise das gezielte Entkuppeln an beliebiger Stelle des Fahrzeugverbandes und das Herauslösen aus diesem. Des Weiteren ist in Kombination mit weiteren zu erfassenden Größen eine gezielte Zustands- und Prozessüberwachung der einzelnen Kupplung möglich.

Bezüglich der Anordnung der Identifikationseinrichtung an der einzelnen Kupplung besteht eine Vielzahl von Möglichkeiten. Diese sind insbesondere von den baulichen Gegebenheiten des Einzelfalles und der Art der Übertragung von Daten und Informationen abhängig. Gemäß einer besonders vorteilhaften Ausführung ist die Identifikationseinrichtung am Kupplungskopf, insbesondere an der beim Kuppeln mit der Gegenkupplung zu dieser gerichteten Stirnseite des Kupplungskopfes angeordnet oder in diesem integriert, d.h. hineinversetzt. Diese Lösung erlaubt die Anordnung im Bereich der Kupplungsebene beider Kupplungen und damit in einem Bereich, welcher zumindest teilweise in direktem Kontakt mit der Gegenkupplung steht, weshalb Identifikationseinrichtungen in Form von sowohl taktilen als auch nichttaktilen Systemen zum Einsatz gelangen können. Ferner sind die Stirnseiten zueinander ausgerichtet und bieten beim Einsatz nicht-taktiler Systeme einen sehr kurzen Übertragungsweg, wobei gleichzeitig auch die Energieversorgung mit realisiert werden kann.

Automatische Kupplungen umfassen im Allgemeinen ferner auch eine mit dem Kupplungskopf verbundene Kupplungsstange sowie eine mit der Kupplungsstange gekoppelte Anlenkung oder Abstützung zum wenigstens mittelbaren Verbinden mit dem spurgebundenen Fahrzeug. Die Identifikationseinrichtung kann dann auch an einer der Komponenten Kupplungsstange oder Anlenkung bzw. Abstützung angeordnet werden, wobei hier die im Hinblick auf die Kommunikation mit der Gegenkupplung entsprechende Systeme, die auch eine Übertragung von Daten und Informationen über größere Distanzen geeignet sind auszuwählen wären.

Beschreiben beide vorgenannte Möglichkeiten die vorzugsweise gewählte direkte Zuordnung der Identifikationseinrichtung zur Kupplung und damit direkte Zuordnung der entsprechend beinhalteten Kupplungs-ID besteht in einer alternativen hier jedoch nicht beanspruchten Ausführung auch die Möglichkeit, die Identifikation mittelbar über eine an der Kupplung befestigte Komponente und deren eigene Komponenten-ID oder aber die Anordnung der Identifikationseinrichtung für die Kupplung direkt an der Komponente zu realisieren. Die automatische Kupplung dient zumindest dem mechanischen Verbinden zweier Fahrzeuge. Zusätzlich sind an diesen Leitungskupplungen vorgesehen, welche direkt oder über einen Geräteträger an der Kupplung gelagert sind und der Übertragung von Strom/Daten oder einem Fluid dienen. Diese liegen als Elektrokupplungen und Luftkupplungen vor und werden beim Kuppel- oder Entkuppelprozess der Kupplung auf deren Betätigung abgestimmt ebenfalls betätigt. In einer konkreten Kupplungskonfiguration eines Einsatzfalles ist dabei einer Kupplung eine bestimmte Elektrokupplung und ggf. Luftkupplung zugeordnet. Elektrokupplung und Luftkupplung können jeweils durch eine eigene Komponenten-ID charakterisiert sein. Es ist jedoch auch denkbar, die gesamte Konfiguration aus Kupplung und Leitungskupplung als Einheit zu betrachten und eine einzige Kupplungs-ID dieser Gesamtkonfiguration zuzuordnen. Die Identifikationseinrichtung kann dann an einer der Leitungskupplungen oder einer Verbindung dieser mit der Kupplung angeordnet sein.

Vorzugsweise ist die Identifikationseinrichtung an oder in einer Leitungskupplung zum Übertragen von Strom und/oder Daten, insbesondere einer Elektrokupplung angeordnet oder an einem Träger zum Verbinden der Elektrokupplung mit dem Kupplungskopf. Da die Elektrokupplungen in der Regel immer mit einer Schutzklappe versehen sind, bietet die Lösung der in dieser integrierten Identifikationseinrichtung den Vorteil eines Schutzes vor Umwelteinflüssen, insbesondere Staub auch im ungekuppelten Zustand der mechanischen Kupplung. Allerdings ist darauf zu achten, dass beim Austausch der Elektrokupplung die Identifikationseinrichtung mit ausgetauscht wird. Eine weitere Möglichkeit ist die Anordnung der eigenen Komponenten-ID oder aber die Anordnung der Identifikationseinrichtung an der automatischen Kupplung zur Verbindung der Druckluftleitung der Waggons.

Identifikationsträger und die Kommunikationseinrichtung sind entweder beabstandet zueinander oder in Funktionskonzentration in einer Baueinheit vorzugsweise am gleichen Bauteil angeordnet. Anordnungen an unterschiedlichen Bauteilen sind zwar denkbar, jedoch komplexer in der Ausführung.

Die Identifikationseinrichtung, insbesondere die Kommunikationseinrichtung dieser ist derart ausgebildet und angeordnet, entweder nur eine unidirektionale Übertragung von Daten und Informationen zu ermöglichen oder aber vorzugsweise eine bidirektionale Übertragung, d.h. einen Austausch. Umfasst für die unidirektionale Übertragung in einer ersten besonders einfachen Ausbildung der Identifikationseinrichtung diese lediglich einen Identifikationsträger und die Kommunikationseinrichtung zum Kommunizieren mit der Identifikationseinrichtung lediglich eine Leseeinrichtung ist in einer zweiten Ausbildung zur bidirektionalen Übertragung der Identifikationsträger auch Bestandteil der Kommunikationseinrichtung. D.h. dieser umfasst insbesondere einen Sender zum Übertragen von Informationen zur Kommunikationseinrichtung der Gegenkupplung und/oder zum Übertragen von Informationen an die der Kupplung zugeordnete Einrichtung zum Erfassen und Verarbeiten von Daten und Informationen oder eine kupplungsfremde Einrichtung zum Erfassen und Verarbeiten von Daten und Informationen.

Bezüglich der Ausbildung des Informationsträgers besteht eine Mehrzahl von Möglichkeiten. Dieser ist vorzugsweise derart ausgebildet, geeignet zu sein, die Identifikationskennung optisch, magnetisch, induktiv oder über Funk bereitzustellen und ggf. zu übertragen. Im Einzelnen sind nachfolgend genannte Komponenten denkbar:
- elektrisch auslesbarer Informationsspeicher, insbesondere Speicherkarte, Chip, Magnetstreifen
- optischer Träger mit optoelektronisch lesbarer Schrift, insbesondere QR-Code oder Strichcode
- RFID-Chip oder RFID-TAG.

Die Auswahl erfolgt dabei in Abhängigkeit des Einsatzfalles und der Auswahl der konkreten Art der Datenübertragung an die weiteren Einrichtungen zur Erfassung und Verarbeitung von Daten und Informationen. Denkbar ist auch eine Kombination mehrere Verfahren zur Datenübertragung.

Die Art der Übertragung von Daten und Informationen zwischen jeweils den einzelnen nachfolgend genannten Einrichtungen
der Identifikationseinrichtung der Kupplung und der Identifikationseinrichtung der Gegenkupplung
   und/oder
der Identifikationseinrichtung der Kupplung und der Einrichtungen zur Erfassung und Verarbeitung von Daten und Informationen an der Kupplung
   und/oder
der Identifikationseinrichtung der Kupplung und einer kupplungsfremden Einrichtung zur Erfassung und Verarbeitung von Daten und Informationen
und/oder den einzelnen Einrichtungen zur Erfassung und Verarbeitung von Daten und Informationen
ist jeweils vorzugsweise drahtlos, wobei die Übertragung per Funk, induktiv, elektrische oder magnetische Wellen erfolgt. In besonders vorteilhafter Ausführung wird die Übertragung per Funk gewählt.

In einer Weiterbildung sind zur Realisierung weiterer Funktionen an der Kupplung Einrichtungen zur Erfassung von Zustands- oder Prozessgrößen der Kupplung oder deren Komponenten vorgesehen, welche mit der an der Kupplung angeordneten Einrichtung zur Erfassung und Verarbeitung von Daten und Informationen an der Kupplung gekoppelt sind.

Erfindungsgemäß kann durch die Ausführung einer Kupplung mit Identifikationseinrichtung aus Identifikationsträger und Kommunikationseinrichtung auf einfache Art und Weise ein System zur Kommunikation zweier mechanisch miteinander verbindbarer oder verbundener mechanischer Kupplungen geschaffen werden. Dazu sind jeweils die an einem Fahrzeug angeordnete Kupplung, welche mit der am benachbarten Fahrzeug angeordneten Gegenkupplung in Eingriff steht, sowie die Gegenkupplung wie vorher beschrieben ausgebildet.

In einem Fahrzeugverband aus einer Mehrzahl von hintereinander angeordneten Fahrzeugen, bei welchem jeweils zwei einander benachbarte Fahrzeuge durch Kuppeln einer an einem Fahrzeug angeordneten Kupplung und einer am benachbarten Fahrzeug angeordneten Gegenkupplung mechanisch miteinander verbindbar oder verbunden sind, sind jeweils die Kupplung und die Gegenkupplung als Kupplung gemäß einem der Ansprüche 1 bis 10 ausgeführt. Durch die Zuordnung der Kennung zu einer Kupplung und der Kupplung zum Fahrzeug ist diese jederzeit genau lokalisierbar und kann verwechselungsfrei angesteuert und überwacht werden.

Insbesondere ist ferner mit einer Ausführung des Fahrzeuges gemäß Anspruch 10 an jedem einzelnen Fahrzeug die Information über das mit diesem verbundene Nachbarfahrzeug durch die Information zur jeweiligen Gegenkupplung eindeutig abrufbar, wenn die an den entgegengesetzten Enden angeordneten Kupplungen zum jeweiligen Kuppeln mit einer Gegenkupplung eines benachbarten Fahrzeuges als erfindungsgemäße Kupplung mit Identifikationseinrichtung zum Abfragen der eigenen Kupplungs-ID und zum Abfragen der ID der Gegenkupplung ausgebildet sind. Das Fahrzeug ist ferner mit einer kupplungsfremden, dem Fahrzeug zugeordneten Einrichtung zur Erfassung und Verarbeitung von Daten und Informationen ausgestattet, welche wenigstens mittelbar mit den Identifikationseinrichtungen der einzelnen Kupplungen und/oder einer fahrzeugfremden Einrichtung zur Erfassung und Verarbeitung von Daten und Informationen koppelbar oder gekoppelt ist.

Für Sicherheitsabfrage, die Ansteuerung der Kupplung sowie weiterer Komponenten und Funktionseinheiten am Fahrzeug sind am Fahrzeug, insbesondere einzelnen Bauteilen, Baugruppen oder Funktionseinheiten Einrichtungen zum Erfassen einer den Zustand und/oder die Funktionsweise dieser Bauteile und Baugruppen wenigstens mittelbar beschreibenden Größe vorgesehen sind, welche mit der dem Fahrzeug zugeordneten Einrichtung zur Erfassung und Verarbeitung von Daten und Informationen koppelbar sind.

Der Fahrzeugverbund weist dazu ein Fahrzeugverbund-Kommunikationssystem auf, umfassend eine jedem Fahrzeug zugeordnete kupplungsfremde Einrichtung zur Erfassung und Verarbeitung von Daten, welche wenigstens mittelbar mit den Identifikationseinrichtung der an diesem Fahrzeug angeordneten Kupplungen gekoppelt ist, wobei die den einzelnen Fahrzeugen zugeordneten Einrichtungen zur Erfassung und Verarbeitung von Daten jeweils mit einer zentralen Einrichtung zur Erfassung und Verarbeitung von Daten und Informationen gekoppelt ist.

Die Information über die an einem Fahrzeug angeordneten Kupplungen und der mit diesen gekoppelten Gegenkupplungen kann mit weiteren an den einzelnen Einrichtungen zur Erfassung und Übertragung von Daten verarbeiteten Größen für unterschiedliche Steuerungs- und Regelungsaufgaben genutzt werden. Dazu sind an der Kupplung und/oder dem Fahrzeug weitere Einrichtungen zur Erfassung von Zustandsgrößen oder die Funktionsweise charakterisierenden Prozessgrößen vorgesehen. Die Erfassungseinrichtungen sind dabei mit der der Kupplung zugeordneten Einrichtung zur Erfassung und Verarbeitung von Daten und Informationen oder der kupplungsfremden Einrichtung zur Erfassung und Verarbeitung von Daten und Informationen gekoppelt, wobei die Kopplung drahtlos und/oder über entsprechende Leitungsverbindungen erfolgt. Die den einzelnen Fahrzeugen zugeordneten Einrichtungen zur Erfassung und Verarbeitung von Daten und Informationen sind über eine zentrale Einrichtung kommunizierend miteinander gekoppelt.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- Figur 1a: einen Fahrzeugverband mit erfindungsgemäß ausgebildeten automatischen Kupplungen;
- Figuren 1b und 1c: in schematisiert vereinfachter Darstellung den Grundaufbau einer Identifikationseinrichtung;
- Figur 1d: eine Verbindung zwischen zwei Fahrzeugen gemäß Figur 1a;
- Figur 2: einen Kupplungskopf mit Identifikationseinrichtung;
- Figur 3: mögliche Anordnungen einer Identifikationseinrichtung der Kupplung;
- Figur 4: die einem Fahrzeug zugeordneten Einrichtungen;
- Figur 5: ein Fahrzeugverband-Kommunikationssystem.

Nachfolgend werden die Figuren detaillierter beschrieben.

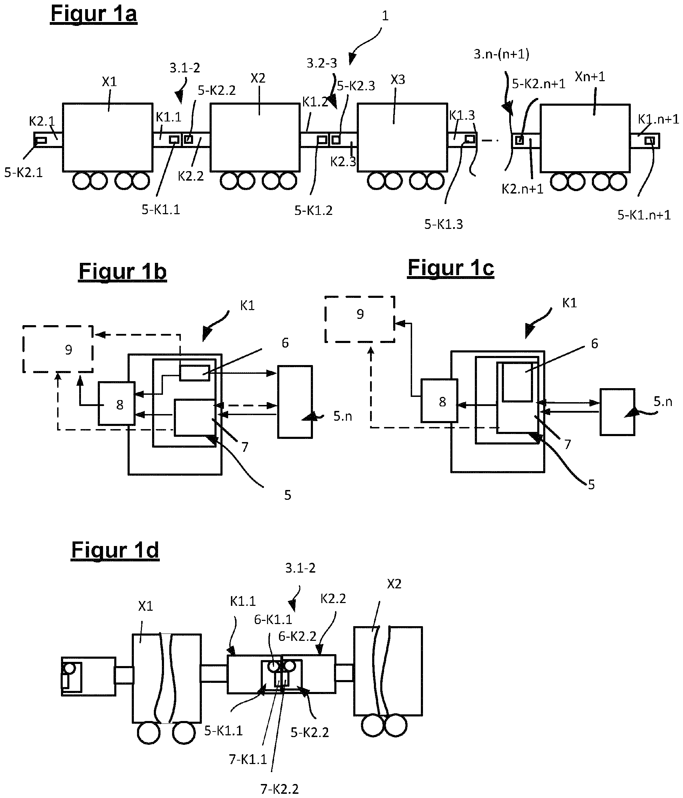

Die Figur 1a verdeutlicht in schematisiert stark vereinfachter Darstellung einen Fahrzeugverband 1 aus zumindest zwei miteinander verbundenen spurgebundenen Fahrzeugen X1, X2, insbesondere Wagen, vorzugsweise einer Mehrzahl Xn und Xn+1 mit n ≥1 in Längsrichtung betrachtet. Dargestellt sind beispielhaft die Fahrzeuge X1, X2, X3 bis Xn+1. Jeweils zwei einander benachbart angeordnete spurgebundene Fahrzeuge X1, X2 sowie X2, X3 bis Xn, Xn+1 sind über eine mechanische Verbindung 3, hier 3.1-2, 3.2-3 bis 3.n-(n+1) aus einer ersten Kupplung K1.n eines Fahrzeuges Xn mit einer zu dieser gerichteten Gegenkupplung K2.n+1 unter Ausbildung eines miteinander in Eingriff stehenden Kupplungspaares verbunden. So ist hier beispielsweise die Kupplung K1.1 eines ersten spurgebundenen Fahrzeuges X1 mit einer zu dieser gerichteten Gegenkupplung K2.2 eines weiteren spurgebundenen Fahrzeuges X2 in Eingriff, in Analogie K1.2 des Fahrzeuges X2 mit K2.3 des Fahrzeuges X3 bzw. K1.n des Fahrzeuges Xn mit K2.n+1 des Fahrzeuges Xn+1. Die Kupplungen sind vorzugsweise als automatische Kupplungen ausgeführt, d.h. können gesteuert gekuppelt und vorzugsweise auch entkuppelt werden. Jede der Kupplungen K1.n bis K1.n+1 weist einen Kupplungsverschluss aufweisenden Kupplungskopf zum Kuppeln mit der der Gegenkupplung K2.n bis K2.n+1 auf. Um Steuerungsaufgaben gezielt an einem der Kupplungspaare oder Fahrzeuge vornehmen zu können, ist es erforderlich, die genaue Zuordnung der Kupplungen zu den Fahrzeugen X1 bis Xn+1 zu kennen. Erfindungsgemäß ist dazu an jeder Kupplung K1.n bis K1.n+1 und jeder Gegenkupplung K2.n bis K2.n+1 eine Identifikationseinrichtung 5, hier 5-K1.1, 5-K1.2, 5-K1.3, 5-K1.n+1, 5-K2.1, 5-K2.2, 5-K2.3, 5-K2.n+1 angeordnet.

Der Grundaufbau und die Grundfunktion der einzelnen Identifikationseinrichtung 5 an einer Kupplung K wird allgemein in den Figuren 1b und 1c, und am Beispiel der Verbindung 3.1-2 zwischen den Fahrzeugen X1 und X2 mittels der Kupplung K1.1 und der Gegenkupplung K2.2 für die Identifikationseinrichtungen 5-K1.1 und 5-K2.2 in Figur 1d beschrieben.

Wie in Figur 1b und 1c dargestellt, umfasst die einer Kupplung K1 zuordenbare Identifikationseinrichtung 5 einen Identifikationsträger 6 und eine Kommunikationseinrichtung 7 zum Kommunizieren mit einer Identifikationseinrichtung 5.n der mit der Kupplung K1 verbindbaren oder verbundenen Gegenkupplung K2 und zum Kommunizieren mit einer der Kupplung K1 zugeordneten Einrichtung 8 zum Erfassen und Verarbeiten von Daten und Informationen oder einer kupplungsfremden Einrichtung 9 zum Erfassen und Verarbeiten von Daten und Informationen. Beide Ausführungen ermöglichen sowohl die Identifikation der Gegenkupplung K2 als auch Erkennung der Kupplung K1 mit der Identifikationseinrichtung 5 der Kupplung K1.

Der Identifikationsträger 6 kann verschiedenartig ausgebildet sein. Dieses enthält zumindest eine zur eindeutigen Kennzeichnung der Kupplung K1 vorgesehene Information, d.h. diese Information darf bei Kupplungen gleicher Art und Typs nicht zwei- oder mehrmals vergeben sein. Bei dieser Information zur eindeutigen Kennzeichnung der Kupplung K1, welche auch als ID bezeichnet wird, kann es sich vorzugsweise um eine Kennnummer oder Bauteilnummer handeln, welche wiederum aus unterschiedlichen Unterinformationen zusammengesetzt sein kann. Die Art, der Aufbau der ID steht dabei im Belieben des Kupplungsherstellers, sollte jedoch empfohlener Weise über den Anwendungsbereich standardisiert sein.

Wie bereits ausgeführt, ist eine einzelne ID einer einzelnen bestimmten Kupplung K1 zugeordnet und damit nur einmal vergeben. In Analogie gilt dies auch für die mit der Kupplung K1 zu kuppelnde Gegenkupplung K2.

Der Informationsträger 6 kann als passiver oder aktiver Informationsträger vorliegen. Im erstgenannten Fall, wie in Figur 1b verdeutlicht, wird die Information aus diesem nur ausgelesen. D.h. dieser weist keine eigene Kommunikationseinrichtung zum aktiven Übertragen der Information auf. Das Auslesen erfolgt durch die Identifikationseinrichtung 5.n der Gegenkupplung und/oder der der Kupplung K1 zugeordneten Einrichtung 8 zum Erfassen und Verarbeiten von Daten und Informationen oder einer kupplungsfremden Einrichtung 9 zum Erfassen und Verarbeiten von Daten und Informationen, beispielsweise einer dem Fahrzeug, an welchem die Kupplung K1 angeordnet ist, zugeordneten Einrichtung zum Erfassen und Verarbeiten von Daten und Informationen. Im zweiten Fall gemäß Figur 1c, ist der Informationsträger 6 Bestandteil der Kommunikationseinrichtung 7, beispielsweise weist dieser einen Sender zum aktiven Übertragen der Information die Identifikationseinrichtung 5.n der Gegenkupplung und/oder der der Kupplung K1 zugeordneten Einrichtung 8 zum Erfassen und Verarbeiten von Daten und Informationen oder einer kupplungsfremden Einrichtung 9 zum Erfassen und Verarbeiten von Daten und Informationen, beispielsweise einer dem Fahrzeug , an welchem die Kupplung K1 angeordnet ist, zugeordneten Einrichtung zum Erfassen und Verarbeiten von Daten und Informationen. Der Informationsträger kann auch eine Zuweisung einer ID durch die zugeordnete Einrichtung 8 erfolgen.

Gemäß Figur 1b kann die Kommunikationseinrichtung somit unidirektional als auch als bidirektionale Einrichtung ausgeführt sein. Gemäß Figur 1c ist immer eine bidirektionale Kommunikation mit Identifikationseinrichtung 5.n der Gegenkupplung K2 gegeben.

Das Vorsehen einer kupplungsfremden Einrichtung 9 in beiden Ausführungen ist beispielhaft. Denkbar sind Ausführungen mit mehreren derartigen Einrichtungen, die unterschiedlichen Komponenten und Einheiten eines Fahrzeugverbandes 1 zuordenbar sind und miteinander zum Übertragen und/oder dem Austausch von Daten und Informationen gekoppelt sind.

Bei der Einrichtung 9 in beiden Ausführungen kann es sich sowohl um im Fahrzeug angeordnete als auch mobile fahrzeugfremde Einrichtungen handeln. Im erstgenannten Fall kann diese von einer, einer Mehrzahl von Fahrzeugen X1 bis Xn zugeordneten zentralen Einrichtung zum Erfassen und Verarbeiten von Daten und Informationen, beispielsweise einer übergeordneten Fahrsteuerung gebildet werden. Im letztgenannten Fall kann es sich beispielsweise um eine stationäre oder mobile und nur temporär wenigstens mittelbar mit der jeweiligen Identifikationseinrichtung 5 bzw. 5.n koppelbare Diagnoseeinrichtung handeln.

In der Figur 1b sind die in dieser Konfiguration notwendigen Übertragungsrichtungen unter Inanspruchnahme der jeweiligen, der Kupplung K1 zugeordneten Einrichtung 8 mit durchgezogener Pfeillinie wiedergegeben, während die Möglichkeit der direkten Übertragung von der Identifikationseinrichtung 5 an eine kupplungsfremde Einrichtung 9 mittels unterbrochener Pfeillinie wiedergegen ist.

Figur 1d zeigt beispielhaft anhand eines Ausschnittes aus Figur 1a die mechanische Verbindung der Fahrzeuge X1, X2 über die Kupplung K1.1 und Gegenkupplung K2.2, wobei jede - die Kupplung und die Gegenkupplung - eine Identifikationseinrichtung 5.K1.1 und 5.K2.2 aufweisen, die miteinander zum Austausch ihrer Kennung kommunizieren können. Beide Identifikationseinrichtungen 5.K1.1 und 5.K2.2 weisen hier jeweils einen Identifikationsträger 6-K1.1 und 6-K2.2 sowie eine Kommunikationseinrichtung 7-K1.1 und 7-K2.2 auf.

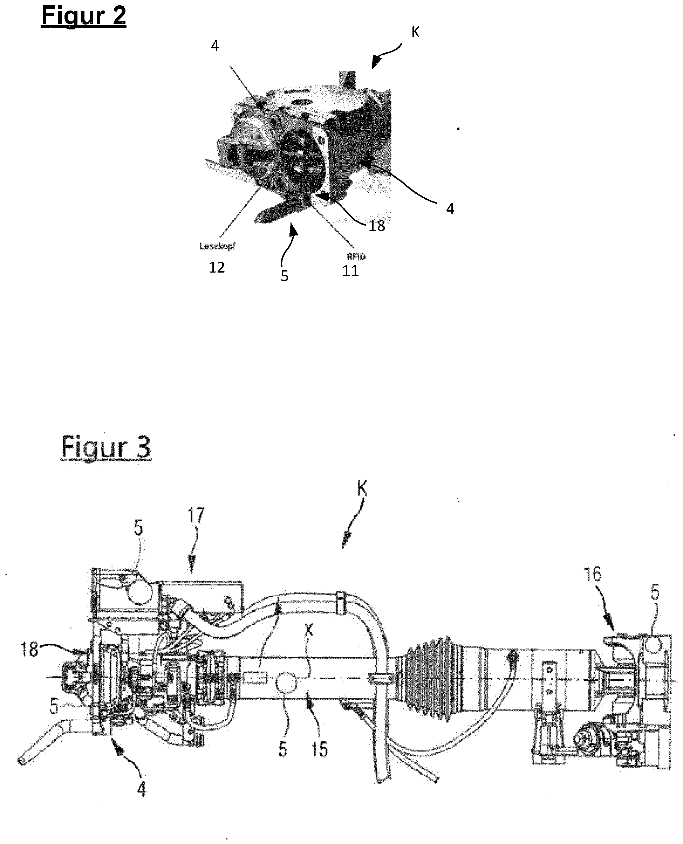

Bezüglich der Ausführung der Identifikationsträger 6 und der Kommunikationseinrichtung 7 besteht im Hinblick auf die Art der Kennung, der Technik des Auslesens und der Datenübertragung eine Mehrzahl von Möglichkeiten. Die Figur 2 zeigt beispielhaft eine besonders vorteilhafte Ausführung einer Identifikationseinrichtung 5. Diese ist an der zum Kuppeln mit einer Gegenkupplung ausgerichteten Stirnseite 18 angeordnet bzw. in diese integriert. Diese ist als ein Sender-Empfänger-System zum automatischen und berührungslosen Identifizieren und Lokalisieren von Objekten mittels Radiowellen, d.h. RFID-System ausgebildet. Der Identifikationsträger 6 wird dabei von einem Transponder oder RFID-Tag 11 gebildet, welcher an der zu identifizierenden Kupplung K angeordnet ist und den kennzeichnenden Code bzw. die Information enthält. Die Kommunikationseinrichtung 7 umfasst zumindest ein Lesegerät 12, welches zum Auslesen der Information eines RFID-Tags an der Gegenkupplung dient. Ferner ist auch der RFID-Tag Bestandteil der Kommunikationseinrichtung 7, indem dieses über das Lesegerät erzeugte magnetische Wechselfelder in geringer oder durch hochfrequente Radiowellen mit dem Lesegerät der Gegenkupplung zum Zwecke der Datenübertragung als auch Energieversorgung gekoppelt wird. Das Lesegerät 12 enthält dabei eine Software zur Steuerung des Auslesens. Ferner zumindest eine Kommunikationsschnittstelle zur Kopplung mit einer Einrichtung 8 oder einer kupplungsfremden Einrichtung 9.

Denkbar, hier jedoch nicht dargestellt können auch optoelektrische Systeme zum Einsatz gelangen.

Bezüglich der Anordnung der einzelnen Identifikationseinrichtung an einer Kupplung K besteht eine Mehrzahl von Möglichkeiten. Diese sind beispielhaft in der Figur 3 wiedergegeben. Die Kupplung K umfasst neben dem Kupplungskopf 4 eine mit diesem verbundene Kupplungsstange 15, welche über eine Anlenkung oder Abstützung 16 mit dem Fahrzeug verbindbar oder verbunden ist. Die Anordnung der Identifikationseinrichtung 5 kann dabei an einer der Bauteile der Kupplung K, d.h. dem Kupplungskopf 4, der Kupplungsstange 15, der Anlenkung 16, insbesondere dem Lagerbock erfolgen oder auch in diese integriert werden.

Ist der Kupplung K eine Leitungskupplung in Form einer Elektrokupplung 17 zugeordnet und an dieser befestigt, besteht auch die Möglichkeit der Anordnung an oder in der Elektrokupplung. Alternativ - hier jedoch nicht dargestellt - kann die Anordnung auch an einem Träger zum Befestigen der Elektrokupplung mit der mechanischen Kupplung K erfolgen. Eine weitere Alternative ist die Anordnung an der Luftkupplung.

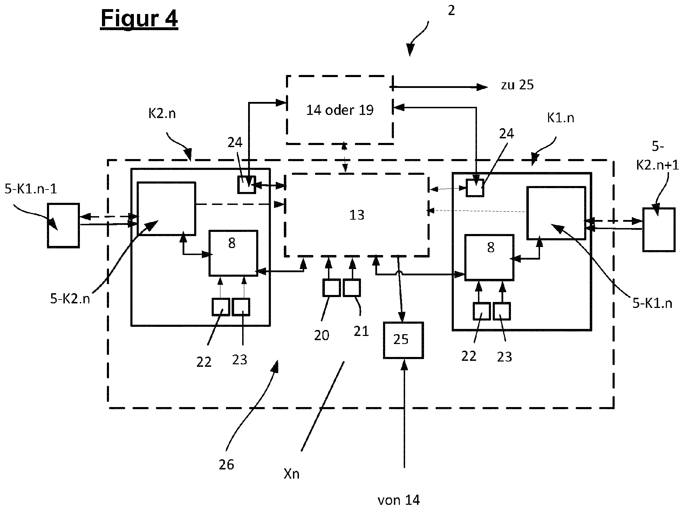

Figur 4 zeigt beispielhaft die Integration der beidseitig an einem Fahrzeug Xn angeordneten Kupplungen K1.n und K2.n in ein Kommunikationssystem eines Fahrzeugverbandes 1, nachfolgend Fahrzeugverband-Kommunikationssystem 2. Die den einzelnen Kupplungen K1.n und K2.n zugeordneten Identifikationseinrichtungen 5-K1.n und 5-K2.n sind dabei wenigstens mittelbar, d.h. entweder direkt oder über zwischengeordnete Einrichtungen zum Erfassen und Verarbeiten von Daten mit einer zentralen Einrichtung zum Erfassen und Verarbeiten von Daten und Informationen, beispielsweise einer übergeordneten, dem gesamten Fahrzeugverband 1 zugeordneten Fahrsteuerung 14. Vorzugsweise erfolgt die Kopplung zumindest über eine, dem einzelnen Fahrzeug X zugeordnete Einrichtung 13 zum Erfassen und Verarbeiten von Daten und Informationen, insbesondere einer sogenannten Wagensteuerung, besonders bevorzugt über eine zwischen Identifikationseinrichtung 5 und Einrichtung 13 an der Kupplung angeordnete Einrichtung 8 zum Erfassen und Verarbeiten von Daten und Informationen.

Die Kopplung zwischen den einzelnen Einrichtungen kann dabei drahtlos oder über Leitungsverbindungen erfolgen. Vorzugsweise finden drahtlose Systeme Anwendung.

Die einzelnen Einrichtungen 8 und 13 zum Erfassen und Verarbeiten von Daten und Informationen können dabei derart ausgebildet sein, dass diese geeignet sind, weitere Daten zu erfassen, welche beispielsweise über entsprechende Erfassungseinrichtungen für Zustands- und Prozessgrößen an der Kupplung K1.n oder K2.n oder dem Fahrzeug Xn erfasst werden. Beispielhaft sind hier entsprechende Erfassungseinrichtungen 22, 23 an der Kupplung K vorgesehen, welche beispielsweise den Kuppelzustand detektieren. Des Weiteren sind beispielhaft entsprechende Erfassungseinrichtungen 20, 21 am Fahrzeug vorgesehen. Die Daten und Informationen über die Kupplungs-ID sowie die weiteren erfassten Größen können dann für unterschiedliche Anwendungszwecke zur Ansteuerung von Stelleinrichtungen 24 an der Kupplung K1.n, K2.n oder Komponenten am Fahrzeug Xn genutzt werden. Dazu gehören unter anderem die aktive Freigabe eines Streckenabschnittes, das Entkuppeln eines Fahrzeuges Xn, insbesondere Wagens oder einer Wagengruppe aus dem Fahrzeugverband 1, das Ansteuern einer Handbremsfunktion, ein Entkuppeln zweier oder mehrerer oder aller Fahrzeuge voneinander und Halten für Schiebebetrieb eines Fahrzeuges oder einer Fahrzeuggruppe, Das Lösen der Haltefunktion nach Beendigung des Schiebebetriebs. Für all diese Funktionen sind neben der genauen Zuordnung einer Kupplung zu einem Fahrzeug, insbesondere Wagen noch zusätzliche Zustand- oder Prozessgrößen zu erfassen und zu verarbeiten. Dazu gehören unter anderem beispielsweise nachfolgende Größen:
- eine den Kuppelzustand der Kupplungen K1.1- K1.n und K2.1 bis K2.n wenigstens mittelbar beschreibenden Größen, z.B. gekuppelt/entkuppelt, Stellung des Kuppelverschlusses
- Orientierung, d.h. Ausrichtung der einzelnen Kupplung im Fahrzeugverband
- Eigenschaften bzw. oder den Zustand von Kupplungskomponenten wenigstens mittelbar beschreibende Größen, wie z.B. Einrichtungen zur Erfassung von Verschleiß an Kupplungskomponenten oder der Anzahl der Betätigungen oder des Ansprechens von Energieverzehreinrichtungen

In Verbindung mit einem Wiegemodul im Wagen und der eindeutigen Positionserkennung im Fahrzeugverband kann eine automatisierte Bremsberechnung durchgeführt werden. Die Verknüpfung zwischen Logistiktelematik und Fahrzeug-ID ermöglicht eine automatisierte Rangierabfertigung und Transportplanung.

In Figur 4 ist es ebenfalls denkbar zusätzlich zur zentralen Einrichtung 14 die Identifikationseinrichtung 5 an eine Diagnoseeinrichtung 19 zu koppeln.

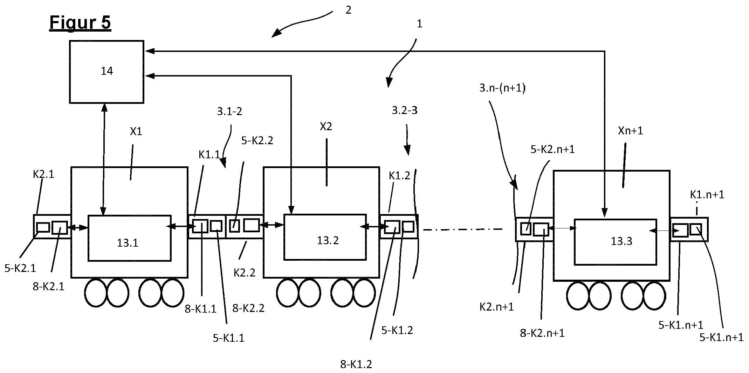

Figur 5 verdeutlicht anhand eines Fahrzeugverbandes aus Figur 1a die Kopplung der einzelnen Identifikationseinrichtungen über die Einrichtungen 8 und/oder 13 mit der zentralen Einrichtung 14.

**Bezugszeichenliste**

| | |
|---|---|
| 1 | Fahrzeugverband |
| 2 | Fahrzeugverband-Kommunikationssystem |
| 3, 3.1-2, 3.2-3, 3.n-(n+1) | Verbindung |
| 4 | Kupplungskopf |
| 5, 5-K1.1, 5-K1.2, 5-K1.3, 5-K1.n+1, 5-K2.1, 5-K2.2, 5-K2.3, 5-K2.n+1 | Identifikationseinrichtung |
| 6, 6-K1.1, 6-K2.2 | Identifikationsträger |
| 7, 7-K1.1, 7-K2.2 | Kommunikationseinrichtung |
| 8, 8-K1.1, 8-K1.2, 8-K1.3, 8-K1.n+1, 8-K2.1, 8-K2.2, 8-K2.3, 8-K2.n+1 | Einrichtung zur Erfassung und Verarbeitung von Daten und Informationen an der Kupplung |
| 9 | kupplungsfremde Einrichtung zur Erfassung und Verarbeitung von Daten und Informationen |
| 11 | RFID |
| 12 | Lesegerät |
| 13 | Einrichtung zur Erfassung und Verarbeitung von Daten und Informationen am Fahrzeug |
| 14 | zentrale Einrichtung zur Erfassung und Verarbeitung von Daten und Informationen, insbesondere zentrale Fahrsteuerung |
| 15 | Kupplungsstange |
| 16 | Anlenkung/Abstützung |
| 17 | Elektrokupplung |
| 18 | Stirnseite Kupplungskopf |
| 19 | Diagnoseeinrichtung |
| 20, 21,22, 23 | Erfassungseinrichtungen |
| 24 | Stelleinrichtung |
| 25 | Stelleinrichtung |
| 26 | Fahrzeugkommunikationssystem |
| K1, K1.1, K1.2, K1.3, K1.n, K1.n+1 | Kupplung |
| K2, K2.1, K2.2, K2.3, K2.n, K2.n+1 | Gegenkupplung |

## Patentansprüche

1. Kupplung, insbesondere automatische Kupplung zum Verbinden eines spurgebundenen Fahrzeuges mit einer Gegenkupplung eines weiteren spurgebundenen Fahrzeuges
mit einem, einen Kupplungsverschluss zum Kuppeln mit der Gegenkupplung aufweisenden Kupplungskopf
**dadurch gekennzeichnet, dass**
direkt an der Kupplung eine Identifikationseinrichtung zum Identifizieren der Kupplung angeordnet ist, umfassend
einen Identifikationsträger und eine Kommunikationseinrichtung zum Kommunizieren mit einer Identifikationseinrichtung der Gegenkupplung und zum Kommunizieren mit einer der Kupplung zugeordneten oder kupplungsfremden Einrichtung zum Erfassen und Verarbeiten von Daten, wobei der Identifikationsträger eine zur eindeutigen Identifizierung der Kupplung vorgesehene Information in Form einer Kennnummer enthält, welche der Kupplung zugeordnet und nur einmal vergeben ist.

2. Kupplung nach Anspruch 1,
**dadurch gekennzeichnet, dass**
die Identifikationseinrichtung am Kupplungskopf, insbesondere an der beim Kuppeln mit der Gegenkupplung zu dieser gerichteten Stirnseite des Kupplungskopfes angeordnet oder in diesem integriert ist.

3. Kupplung nach Anspruch 1 oder 2, umfassend:
eine mit dem Kupplungskopf verbundene Kupplungsstange
eine mit der Kupplungsstange gekoppelte Anlenkung oder Abstützung zum wenigstens mittelbaren Verbinden mit dem spurgebundenen Fahrzeug;
**dadurch gekennzeichnet, dass**
die Identifikationseinrichtung an einer der Komponenten Kupplungsstange oder Anlenkung oder Abstützung angeordnet ist.

4. Kupplung nach einem der Ansprüche 1 bis 3,
**dadurch gekennzeichnet, dass**
der Identifikationsträger und die Kommunikationseinrichtung beabstandet zueinander am gleichen Bauteil oder an unterschiedlichen Bauteilen angeordnet sind.

5. Kupplung nach einem der Ansprüche 1 bis 4,
**dadurch gekennzeichnet, dass**
der Identifikationsträger Bestandteil der Kommunikationseinrichtung ist, umfassend einen Sender zum Übertragen von Informationen zur Kommunikationseinrichtung der Gegenkupplung und zum Übertragen von Informationen an die der Kupplung zugeordnete Einrichtung zur Erfassung und Verarbeitung von Daten und Informationen oder eine kupplungsfremde Einrichtung zur Erfassung und Verarbeitung von Daten und Informationen.

6. Kupplung nach einem der Ansprüche 1 bis 5,
**dadurch gekennzeichnet, dass**
der Identifikationsträger derart ausgebildet ist, geeignet zu sein, die Identifikationskennung optisch, magnetisch, induktiv oder über Funk bereitzustellen und ggf. zu übertragen.

7. Kupplung nach einem der Ansprüche 1 bis 6,
**dadurch gekennzeichnet, dass**
der Identifikationsträger als eine der nachfolgend genannten Komponenten ausgebildet ist:
- ein elektrisch auslesbarer Informationsspeicher, insbesondere Speicherkarte, Chip, Magnetstreifen
- ein optischer Träger mit optoelektronisch lesbarer Schrift, insbesondere QR-Code oder Strichcode
- ein RFID-Chip oder RFID-TAG.

8. Kupplung nach einem der Ansprüche 1 bis 7,
**dadurch gekennzeichnet, dass**
die Übertragung von Daten und Informationen zwischen
der Identifikationseinrichtung der Kupplung und der Identifikationseinrichtung der Gegenkupplung
und/oder
der Identifikationseinrichtung der Kupplung und der Einrichtungen zur Erfassung und Verarbeitung von Daten und Informationen an der Kupplung
und/oder
der Identifikationseinrichtung der Kupplung und einer kupplungsfremden Einrichtung zur Erfassung und Verarbeitung von Daten und Informationen
und/oder den einzelnen Einrichtungen zur Erfassung und Verarbeitung von Daten und Informationen
drahtlos erfolgt, wobei die Übertragung über Funk, induktiv, elektrische oder magnetische Wellen erfolgt.

9. Kupplung nach einem der Ansprüche 1 bis 8,
**dadurch gekennzeichnet, dass**
an der Kupplung wenigstens eine Einrichtung zum Erfassen einer den Zustand und/oder die Funktionsweise der Kupplung oder deren einzelner Komponenten wenigstens mittelbar beschreibenden Größe vorgesehen ist, wobei die einzelne Einrichtung mit der an der Kupplung angeordneten Einrichtung zur Erfassung und Verarbeitung von Daten und Informationen gekoppelt ist.

10. Spurgebundenes Fahrzeug, insbesondere Schienenfahrzeug
mit an den entgegengesetzten Enden angeordneten Kupplungen zum jeweiligen Kuppeln mit einer Gegenkupplung eines benachbarten Fahrzeuges, wobei die an dem Fahrzeug angeordneten Kupplungen als Kupplung gemäß einem der Ansprüche 1 bis 9 ausgebildet sind und
mit einer kupplungsfremden, dem Fahrzeug zugeordneten Einrichtung zur Erfassung und Verarbeitung von Daten und Informationen, welche wenigstens mittelbar mit den Identifikationseinrichtungen der einzelnen Kupplungen und/oder einer fahrzeugfremden Einrichtung zur Erfassung und Verarbeitung von Daten und Informationen koppelbar oder gekoppelt ist.

11. Spurgebundenes Fahrzeug, insbesondere Schienenfahrzeug nach Anspruch 10,
**dadurch gekennzeichnet, dass**
am Fahrzeug, insbesondere einzelnen Bauteilen, Baugruppen oder Funktionseinheiten Einrichtungen zum Erfassen einer den Zustand und/oder die Funktionsweise dieser Bauteile und Baugruppen wenigstens mittelbar beschreibenden Größe vorgesehen sind, welche mit der dem Fahrzeug zugeordneten Einrichtung zur Erfassung und Verarbeitung von Daten und Informationen koppelbar sind.

12. Fahrzeugverband, umfassend eine Mehrzahl von spurgebundenen Fahrzeugen gemäß einem der Ansprüche 10 oder 11, mit einem Fahrzeugverband-Kommunikationssystem umfassend eine zentrale Einrichtung zur Erfassung und Verarbeitung von Daten an einem der Fahrzeuge, insbesondere Fahrzeugsteuerung, welche mit jeder der einem Fahrzeug zugeordneten kupplungsfremden Einrichtungen zur Erfassung und Verarbeitung von Daten gekoppelt ist.

13. Fahrzeugverband-Kommunikationssystem für Fahrzeugverbände aus einer Mehrzahl von miteinander mechanisch über Kupplungen gemäß einem der Ansprüche 1 bis 10 verbundenen Fahrzeugen, umfassend
- jeweils jeder Kupplung zugeordnete Einrichtungen zur Erfassung und Verarbeitung von Daten
- jeweils jedem Fahrzeug zugeordnete kupplungsfremde Einrichtungen zur Erfassung und Verarbeitung von Daten
- eine zentrale Einrichtung zur Erfassung und Verarbeitung von Daten; wobei die vorgenannten Einrichtungen miteinander gekoppelt sind, wobei die Kopplung insbesondere drahtlos erfolgt.

## Claims

1. Coupling, in particular automatic coupling, for connecting a track-bound vehicle to a mating coupling of another track-bound vehicle,
having a coupling head comprising a coupling closure for coupling to the mating coupling,
**characterized in that**
an identification device for identifying the coupling is arranged directly on the coupling, comprising
an identification medium and a communication device for communicating with an identification device of the mating coupling and for communicating with a device that is associated with the coupling or non-coupling-related for capturing and processing data, the identification medium containing information intended to explicitly identify the coupling in the form of one of the identification numbers that is associated with the coupling and allocated only once.

2. Coupling according to Claim 1,
**characterized in that**
the identification device is arranged on or integrated in the coupling head, in particular on the face of the coupling head that points toward the mating coupling during coupling thereto.

3. Coupling according to Claim 1 or 2, comprising:
a coupling bar connected to the coupling head,
an articulation or support coupled to the coupling bar for at least indirect connection to the track-bound vehicle;
**characterized in that**
the identification device is arranged on one of the components: coupling bar or articulation or support.

4. Coupling according to one of Claims 1 to 3,
**characterized in that**
the identification medium and the communication device are arranged at a distance from one another on the same part or on different parts.

5. Coupling according to one of Claims 1 to 4,
**characterized in that**
the identification medium is part of the communication device,
comprising a transmitter for transmitting information to the communication device of the mating coupling and for transmitting information to the device associated with the coupling for capturing and processing data and information or to a non-coupling-related device for capturing and processing data and information.

6. Coupling according to one of Claims 1 to 5,
**characterized in that**
the identification medium is designed to be suitable for providing and optionally transmitting the identification identifier optically, magnetically, inductively or by radio.

7. Coupling according to one of Claims 1 to 6,
**characterized in that**
the identification medium is in the form of one of the components cited below:
- an electrically readable information store, in particular memory card, chip, magnetic strip
- an optical medium containing opto-electronically readable script, in particular QR code or barcode
- an RFID chip or RFID tag.

8. Coupling according to one of Claims 1 to 7,
**characterized in that**
the transmission of data and information between the identification device of the coupling and the identification device of the mating coupling
and/or
the identification device of the coupling and the devices for capturing and processing data and information at the coupling
and/or
the identification device of the coupling and a non-coupling-related device for capturing and processing data and information
and/or the individual devices for capturing and processing data and information
takes place wirelessly, the transmission taking place by radio, inductively, electrical or magnetic waves.

9. Coupling according to one of Claims 1 to 8,
**characterized in that**
there is provision on the coupling for at least one device for capturing a variable that at least indirectly describes the state and/or the manner of operation of the coupling or the individual components thereof, the individual device being coupled to the device arranged on the coupling for capturing and processing data and information.

10. Track-bound vehicle, in particular rail vehicle,
having couplings that are arranged at the opposite ends for respectively coupling to a mating coupling of an adjacent vehicle, the couplings arranged on the vehicle being in the form of a coupling according to one of Claims 1 to 9, and
having a non-coupling-related device, associated with the vehicle, for capturing and processing data and information, that is at least indirectly couplable or coupled to the identification devices of the individual couplings and/or a non-vehicle-related device for capturing and processing data and information.

11. Track-bound vehicle, in particular rail vehicle, according to Claim 10,
**characterized in that**
there is provision on the vehicle, in particular individual parts, assemblies or functional units, for devices for capturing a variable that at least indirectly describes the state and/or the manner of operation of these parts and assemblies, which devices are couplable to the device associated with the vehicle for capturing and processing data and information.

12. Vehicle train, comprising a plurality of track-bound vehicles according to either of Claims 10 and 11, having a vehicle train communication system comprising a central device for capturing and processing data on one of the vehicles, in particular vehicle controller, which is coupled to each of the non-coupling-related devices associated with a vehicle for capturing and processing data.

13. Vehicle train communication system for vehicle trains comprising a plurality of vehicles mechanically connected to one another by way of couplings according to one of Claims 1 to 10, comprising
- devices respectively associated with each coupling for capturing and processing data
- non-coupling-related devices respectively associated with each vehicle for capturing and processing data
- a central device for capturing and processing data; the aforementioned devices being coupled to one another, the coupling taking place in particular wirelessly.

## Revendications

1. Attelage, en particulier attelage automatique destiné à relier un véhicule sur voie à un attelage homologue d'un autre véhicule sur voie, ledit attelage comprenant
une tête d'attelage comportant une fermeture d'attelage destinée à s'accoupler à l'attelage homologue,
**caractérisé en ce que**
un dispositif d'identification destiné à identifier l'attelage est disposé directement sur l'attelage, ledit dispositif d'identification comprenant un support d'identification et un dispositif de communication destiné à communiquer avec un dispositif d'identification d l'attelage homologue et à communiquer avec un dispositif associé à l'attelage ou extérieur à l'attelage et destiné à acquérir et traitement des données, le support d'identification contenant une information prévue pour identifier sans ambiguïté l'attelage et se présentant sous la forme d'un numéro d'identification qui est associé à l'attelage et qui n'est attribué qu'une seule fois.

2. Attelage selon la revendication 1,
**caractérisé en ce que**
le dispositif d'identification est disposé sur la tête d'attelage, en particulier sur le côté frontale de la tête d'attelage qui est dirigé vers l'attelage homologue lors de l'attelage à celui-ci, ou qui est intégré dans celui-ci.

3. Attelage selon la revendication 1 ou 2, comprenant :
une tige d'attelage reliée à la tête d'attelage,
une articulation ou un appui accouplé à la tige d'attelage et destiné à être reliée au moins indirectement au véhicule sur voie ;
**caractérisé en ce que**
le dispositif d'identification est disposé sur l'un parmi la tige d'attelage ou l'articulation ou l'appui.

4. Attelage selon l'une des revendications 1 à 3,
**caractérisé en ce que**
le support d'identification et le dispositif de communication sont disposés à distance l'un de l'autre sur le même composant ou sur des composants différents.

5. Attelage selon l'une des revendications 1 à 4,
**caractérisé en ce que**
le support d'identification fait partie du dispositif de communication, lequel comprend un émetteur destiné transmettre des informations au dispositif de communication de l'attelage homologue et à transmettre des informations au dispositif associé à l'attelage et destiné à acquérir et traiter des données et des informations ou un dispositif extérieur à l'attelage destiné à acquérir et traiter des données et des informations.

6. Attelage selon l'une des revendications 1 à 5,
**caractérisé en ce que**
le support d'identification est conçu de manière à pouvoir fournir et éventuellement transmettre le code d'identification par voie optique, magnétique, inductive ou radio.

7. Attelage selon l'une des revendications 1 à 6,
**caractérisé en ce que**
le support d'identification est conçu comme l'un des composants suivants :
- une mémoire d'informations lisible électriquement, notamment une carte à mémoire, une puce, une piste magnétique,
- un support optique à écriture lisible par des moyens optoélectronique, notamment un QR code ou un code à barres,
- une puce RFID ou une étiquette RFID.

8. Attelage selon l'une des revendications 1 à 7,
**caractérisé en ce que**
la transmission de données et d'informations entre
le dispositif d'identification de l'attelage et le dispositif d'identification de l'attelage homologue
et/ou
le dispositif d'identification de l'attelage et les dispositifs d'acquisition et de traitement de données et d'informations sur l'attelage
et/ou
le dispositif d'identification de l'attelage et un dispositif extérieur à l'attelage destiné à l'acquisition et au traitement de données et d'informations
et/ou les dispositifs individuels destinés à l'acquisition et au traitement de données et d'informations
est effectuée sans fil,
la transmission étant effectuée par radio, par induction, par ondes électriques ou magnétiques.

9. Attelage selon l'une des revendications 1 à 8,
**caractérisé en ce que**
au moins un dispositif est prévu sur l'attelage pour acquérir une grandeur qui décrit au moins indirectement l'état et/ou le mode de fonctionnement de l'attelage ou ses composants individuels, le dispositif individuel étant couplé au dispositif disposé sur l'attelage et destiné à l'acquisition et au traitement de données et d'informations.

10. Véhicule sur voie, en particulier véhicule ferroviaire, comprenant
des attelages disposés aux extrémités opposées et destinés à être respectivement accouplés à un attelage homologue d'un véhicule adjacent, les attelages disposés sur le véhicule étant conçus comme un attelage selon l'une des revendications 1 à 9
et
un dispositif extérieur à l'attelage, associé au véhicule et destiné à l'acquisition et au traitement de données et d'informations et qui est couplé ou peut être couplé au moins indirectement aux dispositifs d'identification des attelages individuels et/ou à un dispositif extérieur au véhicule destiné à l'acquisition et au traitement de données et d'informations.

11. Véhicule sur voie, notamment véhicule ferroviaire, selon la revendication 10,
**caractérisé en ce que**
des dispositifs, notamment des composants, des modules ou des unités fonctionnelles individuels sont prévus sur le véhicule pour acquérir et traiter une grandeur décrivant au moins indirectement l'état et/ou le mode de fonctionnement des composants et modules, lesquels peuvent être couplés au dispositif associé au véhicule et destiné à l'acquisition et au traitement de données et d'informations.

12. Convoi de véhicules comprenant une pluralité de véhicules sur voie selon l'une des revendications 10 ou 11, ledit convoi comprenant un système de communication de convoi de véhicules comprenant un dispositif central d'acquisition et de traitement de données sur l'un des véhicules, notamment la commande de véhicule, qui est couplé à chacun des dispositifs extérieurs à l'attelage associés à un véhicule et destinés à l'acquisition et au traitement de données.

13. Système de communication de convoi de véhicules destiné à des convois de véhicules comprenant une pluralité de véhicules reliés mécaniquement les uns aux autres par des attelages selon l'une des revendications 1 à 10, ledit système comprenant
- des dispositifs respectivement associés à chaque attelage et destinés à l'acquisition et au traitement de données
- des dispositifs extérieurs aux attelages et respectivement associés à chaque véhicule et destiné à l'acquisition et au traitement de données
- un dispositif central d'acquisition et de traitement de données ;
les dispositifs susmentionnés étant couplés les uns aux autres,
le couplage étant effectué notamment sans fil.
